# EUROPEAN PATENT APPLICATION

(11) **EP 4 640 658 A1**
(43) Date of publication of application: **29.10.2025**
(21) Application number: 24203099.7
(22) Date of filing: 27.09.2024
(51) Int. Cl.: C05G 3/80, A01G 24/10, A01G 24/12, A01G 24/17, A01G 24/18, A01G 24/42, A01G 24/50, C05G 5/30, C05G 5/35, C05G 5/00, C09K 17/04, E02B 11/00, E02B 11/02

(54) **MINERAL COMPOSITION FOR PROMOTING PLANT GROWTH**

(30) Priority: 25.04.2024 PL 44841224
(71) Applicant: Akademia Gorniczo-Hutnicza im. Stanislawa Staszica w Krakowie, 30-059 Krakow (PL)
(72) Inventor: GAWENDA, Tomasz, 31-340 Kraków (PL); STEMPKOWSKA, Agata, 32-085 Modlnica (PL)
(74) Representative: Pietruszynska, Elzbieta

(57) **Abstract**

The subject matter of the invention is a mineral composition promoting plant growth having a core-shell structure, which consists of a core based on granular materials having a layered structure and a core shell holding the layered structure of the core, wherein the core consists of:
- an outer core formed from at least one type of mineral aggregate with regular or irregular grains characterised by the cavemosity of at least 40% and a narrow graining range,
- an inner core formed from a fertiliser-mineral mix comprising the following components:
a) at least one granular fertiliser,
b) mineral granules formed from at least one mineral raw material,
c) at least one type of mineral aggregate with regular or irregular grains characterised by the cavernosity of at least 40% and a narrow graining range,
d) granular bone material,

wherein the outer core surrounds the inner core and the section area of the outer core constitutes from 40 to 60% of the section area of the inner core.

## Description

### Field of the invention

The subject matter of the invention relates to a mineral composition promoting plant growth having a core-shell structure for use in horticulture, agriculture and forestry in the cultivation of trees and shrubs, ornamental plants and vegetables, as a natural mineral agent promoting the growth of plants growing both in the ground and in containers such as vases, pots or boxes.

### Background of the invention

Soil, which is the top layer of the ground and its most important element, is characterised by three phases: solid, liquid and gaseous, with which plant roots come into direct contact. The solid phase consists of the mineral and the organic part and is the main source of elements essential for plants. The liquid phase is the soil solution, from which the roots take up water and mineral components, mainly in ionic form. The gaseous phase is the air that fills the free spaces in the soil. It is the source of oxygen necessary for the normal course of life processes in the root, as well as nitrogen, carbon dioxide and water vapour. The mineral components are pieces of parent rocks and minerals, whereas the organic components are humus and plant and animal residues [1].

The presence of thirteen mineral elements (nitrogen (N), phosphorus (P), potassium (K), calcium (Ca), magnesium (Mg), sulphur (S), iron (Fe), zinc (Zn), boron (B), copper (Cu), molybdenum (Mo), manganese (Mn), chlorine (Cl)) is absolutely essential for the full realisation of the plant life cycle. All these elements are taken up by the land plants from the soil in the form of water-soluble ions. A particularly important element is nitrogen, which is available to the plant in three forms: mineral as nitrate and ammonium salts, organic in the form of urea, and molecular (N₂) for plants living in symbiosis with certain microorganisms. Nitrogen is found in soil humus, the remains of dead organisms, and organic and mineral compounds. There is more nitrogen N₂, in soil air than in atmospheric air. Nitrogen is also a component of parent rocks. Precipitation is also a source of nitrogen compounds. However, nitrogen is not always present in sufficient quantities in the soil, that is way soil fertilisation is important [1].

In the field of plant cultivation, soil type often causes many care problems. The main properties of clay soil are mainly a compact structure and a problem with water permeability. Numerous cracks and delaminations can often be seen on clay soil, and the soil itself is either very brittle or very moistened. Depending on the weather conditions, such a substrate may dry out excessively and thus it cracks and forms numerous fissures, or it may retain water excessively, which in turn causes plants to rot, and mud puddles may form on the surface of the substrate. This is because clay soils do not store water properly - when it rains, due to their compacted structure, water does not penetrate into the deeper layers of the land, but flows in through tiny fissures and collects shallowly below the surface of the substrate. This in turn adversely affects the roots of plants, which may be under- or over-watered - depending on where the water is retained. The lack of adequate permeability of the substrate also means that not enough nutrients, including valuable nitrogen and oxygen, reach the plants, causing them to die quickly and stunted growth [2].

In order for a plant's root system to develop properly and be resistant to diseases, it needs sufficient oxygen, which should be supplied in water for watering. As a rule, however, this does not happen. Therefore, proper aeration of the soil is also an important factor. A lack of oxygen promotes fermentation processes which, if last longer, cause the roots to suffocate, resulting in ideal conditions for the growth of pathogenic microorganisms that cause rotting and, ultimately, root death. Oxygen promotes the proper development of the root system and helps to prevent diseases. It also supports protein synthesis and improves the course of metabolic processes, contributing to accelerated plant growth and development [5].

### The state of the art

Various methods of soil aeration are known in the field, involving mechanical care treatment, carried out by means of, for example, a soil miller to which a verticutter or aerator is attached. Due to the special construction of these elements, the spikes penetrate the land providing it with air while loosening the compacted soil structure.

In hobby home cultivation, for example in pots, aeration elements are used in the form of discs, hydroponic stones or perforated strips connected by a hose to air pumps. In addition to the aforementioned elements, a well-known remedy used for plants cultivation in boxes, pots and vases is pumice stone, which helps to keep the appropriate moisture of the substrate and at the same time provides its good aeration. Pumice stone loosens heavy soils and absorbs large amounts of water and nutrients [1]. Other means, such as vermiculite or crushed foamed polystyrene, are also used to loosen soil, but these materials do not have retention properties and the use of foamed polystyrene is additionally controversial for environmental reasons. Good root aeration and substrate loosening is provided by shredded and composted bark; however it is not possible to use it for all types of plants due to its acidifying properties, and conifer bark is mainly offered for sale. In addition, tree bark that is not subjected to a sterilisation process, e.g. thermal sterilisation to kill fungal and bacterial pathogens, can pose a threat to plant habitats. One example is the spread of pine needle cast (the fungus causing the disease - *Lophodermium seditiosum)* or phytophthorosis (a fungal disease caused by *Phytophthora cinnamomi* and *Phytophthora plurivora*) on ornamental and forest conifers [2, 3, 4].

Various solutions and means for fertilising plants are also known in the field. Patent description PL 241757 discloses a method of producing granulated mineral fertiliser from crushed raw materials of mineral origin, such as limestone, dolomite, chalk, used individually as a starting material for a single-component fertiliser or in the form of a mixture of such raw materials, optionally enriched with the addition of gypsum, used for the production of multi-component fertilisers. In the subject method, a biostimulant for plant growth and development is added to the starting material, in the form of an aqueous solution of humic acid, or an aqueous solution of an extract of terrestrial plants or an extract of seaweed, wherein the amount of the biostimulant is from 0.001% to 1% by weight of the starting material supplied to the fertiliser production process, preferably from 0.1% to 0.8% of this weight.

From patent description PL 234738, there is known a method for producing granulated NPK fertiliser, from agricultural waste, food industry waste and inedible animal raw materials. The subject method is characterised in that agricultural and food industry wastes with a nitrogen content preferably above 5%, such as animal blood meal and animal waste, and inedible animal raw materials with a high phosphorus content, preferably over 20% P₂O₅, such as bones and fish bones, and waste with an elevated potassium (K) content above 5%, such as ash from the combustion of sludge from the III° (stage) biological treatment, is mixed with freeze-dried microorganisms capable of solubilisation and producing mineral or organic acids, such as *Acidithiobacillus ferrooxidans* or *Bacillus* megaterium, *Bacillus subtilis,* in a proportion of 0.5 to 70 parts by weight of nitrogenous, phosphoric and potassium raw materials, in which the proportion of P₂O₅ is 0.1 to 25% by weight, per 10 to 20 parts by weight of microorganisms, and then is subjected to mechanical granulation, with a proportion of 10 to 30 parts by weight of granulating agent. The granulated mixture is introduced into the soil where, in a process of solubilisation by microorganisms, the fertiliser components are transformed into a form that is bio-available to plants. To produce a formulation with a faster macronutrient release, for plants with increased nutritional requirements, microorganisms are introduced in the form of *Acidithiobacillus ferrooxidans* or in the form of a mix of *Bacillus megaterium* and *Bacillus subtilis* in a ratio of 1:5 In contrast, to produce a formulation with a slower macronutrient release, for plants requiring phosphorus throughout the entire growth period, microorganisms are introduced in the form of *Bacillus megaterium.*

A granulate promoting plant cultivation based on rock silicate meal, which is used as an agent promoting plant cultivation and as an additive to natural fertilisers, and a method of producing thereof is known from patent description PL 210673. In the described granulate, the rock silicate meal, selected from the group of basalt, granite, feldspar or amphibolite meals, consists of a silty fraction or a silty fraction and a broken sand with a grain diameter of 0 to 2 mm, and starch pulp is added to the rock silicate meal in a ratio of 4:1 to 1:4.

A controlled-release fertilizer composition consisting of a water-soluble fertilizer core material in the form of granules and a water-insoluble polymeric shell applied on the core is known from patent description PL 187484. The fertilizer composition is formed to allow a cumulative release of artificial fertilizer in the amount less than 10% by weight of the fertilizer contained in the core within 30 days after exposure of the fertilizer composition to moisture, wherein the shell consists of a single uniform layer, substantially continuous polymeric envelope having a thickness of 5 to 110 micrometers and covering at least 90% of the core material granules.

Patent description PL 177651 discloses a fertiliser stick for fertilising potted and balcony plants, with simultaneous control of pests and treatment of diseases caused by fungi. The fertiliser stick contains a nitrogenous and/or phosphoric and/or potassium and/or magnesium fertiliser, polyvinyl alcohol, plasticiser and filler. It consists of two layers - an inner layer of fertiliser and an outer layer of insecticide and/or fungicide (carbedazine).

Another solution known from patent description PL 205250 is a fertilizer stick which consists of a core containing a fertilizer or a mixture of fertilizers, a binder and optionally other auxiliary agents, and an outer layer, which is a natural fertilizer and a binder, optionally in a mixture with at least one plant protection agent and/or at least one growth regulator and/or mycorrhizal mycelial spores and/or at least one macronutrient and/or at least one micronutrient, wherein the binder content in the core of the stick is from 1% to 50% and the binder content in the outer layer is from 0.1% to 10%.

### Problem to be solved by the invention

Aeration, irrigation and fertilisation of soil is very important for the proper development of plants. Despite the existence of various solutions and means for fertilising plants, such as loose granules or fertiliser sticks or cores, as well as means and methods which enable loosening excessively compacted substrate and restoring its correct plant-friendly structure, provide aeration and improve retention, so far no universal solution has been developed to provide all these functions.

Therefore, the purpose of the present invention was to develop a universal solution in the form of a mineral composition promoting plant growth that both fertilises the soil and ensures the maintenance of adequate hydration, retention and aeration of the soil. The purpose of the invention was also to provide a mineral composition that is universal in its application to a variety of plants, including trees and shrubs, ornamental plants or vegetables, both growing in the ground and cultivated in containers such as vases, pots or boxes. An important purpose was also to use difficult-to-manage bone waste from food production processes, post-mining waste, waste construction materials and mineral raw materials as components for constructing mineral composition cores.

The aforementioned purposes were achieved with the solutions presented in the attached patent claims. Indeed, it was unexpectedly found that these objectives could be realised using a plant growth promoting mineral composition with a specific core-shell structure and containing suitable components.

### The gist of the invention

The subject matter of the present invention relates to a mineral composition promoting plant growth having a core-shell structure, characterised in that it consists of a core based on granular materials and having a layered structure, and a core shell holding the layered structure of the core, wherein the core consists of:
- an outer core formed from at least one type of mineral aggregate with regular or irregular grains and characterised by the cavernosity of at least 40% and a narrow graining range,
- an inner core formed from a fertiliser-mineral mix containing the following components:
   a) at least one granular fertiliser,
   b) mineral granules formed from at least one mineral raw material,
   c) at least one type of mineral aggregate with regular or irregular grains characterised by the cavernosity of at least 40% and a narrow graining range,
   d) granular bone material,
wherein the outer core surrounds the inner core and the sectional area of the outer core constitutes from 40 to 60% of the sectional area of the inner core.

Preferably, the section area of the outer core constitutes 50% of the sectional area of the inner core.

Preferably, the mineral aggregate forming the outer core and/or the mineral aggregate contained in the fertiliser-mineral mix of the inner core is a crushed mineral aggregate.

Preferably, the mineral aggregate forming the outer core and/or the mineral aggregate contained in the fertiliser-mineral mix of the inner core is a mineral aggregate having flat grains.

Preferably, the mineral aggregate forming the outer core and/or the mineral aggregate contained in the fertiliser-mineral mix of the inner core is a mineral aggregate with a grain size distribution in which the difference between the upper and lower grain size of the grain class is no greater than 2.5 mm.

Preferably, the mineral aggregate forming the outer core and/or the mineral aggregate contained in the fertiliser-mineral mix of the inner core is characterised by the cavernosity of more than 55% and/or an absorbability after 24 h of at least 10% and/or a bulk density of not more than 1.2 g/cm³.

Preferably, the mineral aggregate forming the outer core and the mineral aggregate contained in the fertiliser-mineral mix of the inner core are the same or different.

Preferably, the mineral aggregate forming the outer core is selected from the group comprising chalcedonite, gravel, fired or roasted clay and clay slate.

Preferably, the mineral aggregate contained in the fertiliser-mineral mix of the inner core is selected from the group comprising chalcedonite, gravel, fired or roasted clay, clay slate, Japanese akadama and Japanese kiryu.

Preferably, the mineral aggregate forming the outer core and/or the mineral aggregate contained in the fertiliser-mineral mix of the inner core is a chalcedonite aggregate, in particular having a graining from 6.3 to 8 mm.

Preferably, the fertiliser-mineral mix comprises a long-acting granular fertiliser. Preferably, the granular fertiliser has a graining from 2 to 8 mm, in particular from 3.15 to 6.3 mm.

Preferably, the mineral granules are formed from a mineral raw material or mineral raw materials ground to a graining of less than 0.2 mm, in particular P90 of less than 0.1 mm, or mineral dusts after processing of mineral raw materials being by-products from the production process, crushing and screening of crushed aggregates.

Preferably, the mineral raw material or mineral raw materials are selected from the group comprising:
- minerals containing bioavailable components, such as biotites, pyroxenes, amphiboles, calcites, dolomites, glauconites, olivines, and related and transformed minerals,
- rocks rich in biotites, pyroxenes, amphiboles, calcites, dolomites, glauconites, olivines, such as basalt, glauconitic sandstone and serpentinite, and
- soil pH-regulating raw materials such as limestone, dolomite and diatomite.

Preferably, the mineral granules further contain standard additives used in granulation, in particular selected from the group comprising wheat flour, humic acid and water.

Preferably, in the mineral granule constitution, the percentage proportion of basalt is from 20 to 40%, in particular 30%, of glauconite from 20 to 40%, in particular 30%, of serpentinite from 20 to 40%, in particular 30%, of wheat flour from 0.5 to 2%, in particular 1%, of humic acid from 4 to 10%, in particular 6%, and of water from 2 to 8%, in particular 3%.

Preferably, the mineral granules are formed from a mineral raw material or mineral raw materials activated by a thermal method, in particular by roasting at the temperature of 1000°C.

Preferably, the mineral granules are activated with agents influencing favourable plant development, selected from the group comprising bioactive agents and microorganisms. Preferably, the mineral granules have a graining in the range from 2 to 10 mm, in particular from 2.0 to 3.15 mm and from 3.15 to 6.3 mm.

Preferably, the bone material is chips from animal horns and/or hooves.

Preferably, the bone material has a graining from 2 to 10 mm, in particular from 6.3 to 10 mm.

Preferably, in the constitution of the fertilizer-mineral mix, the percentage proportion of granular fertilizer is from 5 to 30%, in particular 10%, of mineral granules from 30 to 60%, in particular 50%, of mineral aggregate from 20 to 40%, in particular 30% and of bone material from 5 to 20%, in particular 10%.

Preferably, the core shell is a biodegradable material selected from metallic material, in particular containing elements such as Fe, Mg, Zn, B, Cu, Mo, Mn, cellulosic material, fabric, plastic or polymeric material, especially a net of ferrous metal wires or perforated sheet, a net of plastic or polymer, perforated cardboard or jute.

Preferably, the mineral aggregate forming the outer core and/or the mineral aggregate contained in the fertiliser-mineral mix of the inner core and/or the shell material is soaked with mineral fertiliser.

Preferably, between the outer core and the inner core, a layer separating these cores is placed, in particular from a biodegradable material.

Preferably, the core has a cylindrical shape with a diameter in the range from 20 to 80 mm, in particular 40 mm and a height from 100 to 500 mm, in particular 300 mm for plants cultivated in the ground and large containers, and in particular 100 mm for plants cultivated in small containers.

Preferably, the composition is in the form of a solid having a cross-section in the shape of a circle, ellipse or polygon, wherein the height of the solid is at least twice the maximum dimension of its cross-section.

### Advantageous effects of the invention

The mineral composition according to the invention, due to the fact that it consists of a core having a layered structure and formed by granular materials, i.e. a mineral aggregate characterised by a specific cavernosity and narrow graining range with regular or irregular grains, in particular flat, forming the outer core and a mineral-fertiliser mix containing granulated fertiliser, preferably long-acting, mineral granules formed from ground and granulated mineral raw materials, mineral aggregate characterised by a specific cavernosity and a narrow graining range with regular or irregular grains, in particular flat, and granular bone material, forming the inner core, contains the necessary mineral and nutritional components for the proper development of plants, promoting their growth. Appropriately selected components of the fertiliser-mineral mix (mineral raw materials and granular fertiliser) ensure that the mineral composition is dedicated to specific types of plants and method of their cultivation.

The layered structure of the core ensures that its structure is stabilised and protected against deformation due to the natural degradation of the mineral components (granular fertilisers and mineral granules). The inner core with mineral aggregate grains will be supported by the stronger structure of the outer core. The grain constitution of the mineral aggregates with the same graining and flat shape ensures cavernosity that enables water and air flow into the soil.

In addition to long-term fertilisation, the mineral composition according to the invention increases the water absorption capacity of soil. The retention of moisture in soil provides more favourable conditions for plant growth and survival during droughts. In the era of global climate warming, droughts will become more frequent, creating desiccated soils, the so called "concrete-like" soils with closed porous structure, and rains will occur more and more frequently as torrential and rarely as light and long rainfall, fog or drizzle [6,7]. Without adequate water and air exchange in the spaces between soil particles, plants will not develop properly. The benefits of soil aeration are rich, fertile, adequately permeable soil and full, healthy plants. Without oxygen, plant vascular systems are unable to function properly and their roots are unable to absorb water. Adequate aeration is particularly important when transplanting plants. Damage to the roots can make an already weak, struggling to survive plant more susceptible to pests and diseases. The cavernous structure of the core of the mineral composition developed by the inventors aerates the roots, and the mineral aggregate forming this structure having the property of high absorbability, preferably soaked with a long-acting fertiliser, and the fertiliser components (granules) found in the inner core yield benefits by nourishing the root system of plants. Tests carried out by the inventors of the invention allow one to conclude that greater cavernosity of the core structure and higher absorbability of the aggregate, even by several percent, is maintained by the grains of aggregates with high porosity and flat shape compared to round (cubic) grains (higher retention capacity of aggregates with flat grains).

According to the invention, the mineral composition provides advantages by improving aerobic aeration, nitrogen aeration and saprogenic gas exchange in the soil structure, improving soil hydration (increasing the retention of soil and the applied core) by rapidly penetrating water deeper into the soil and retaining moisture in the porous structure of the aggregate (core). An advantage provided by the composition according to the invention is also an increase in the capacity of water absorption into the soil during torrential rainfalls by direct migration of runoff water over the surface of dried soil into its depth through the drainage of the cavernous structure of the core, and an improvement in the physical and chemical properties of soil (e.g. change or maintenance of pH, fertilisation with nutrients). The mineral composition according to the invention is particularly recommended for heavy and compacted clayey-silty soils and grounds located on slopes.

An advantage of the mineral composition according to the invention is also the universal nature of its use, since such compositions can be used for fertilizing trees and shrubs, including fruit trees and shrubs, ornamental plants or vegetables, growing both in soil and cultivated in containers. Of particular importance is the use of compositions in plant cultivation in pots, vases or boxes, in which the air access to the roots may be restricted. In the case of plants growing in the ground, the cores trap water thus preventing rapid run-off from the land surface, especially in the case of slant slopes and occurrence of torrential rainfalls.

An advantage of using the mineral composition according to the invention is the simple way of applying it to the plant substrate by drilling the soil with an auger or digging it into the soil next to the plant with a shovel, or when planting the plant by placing it next to the plant in a suitable position and covering it with earth.

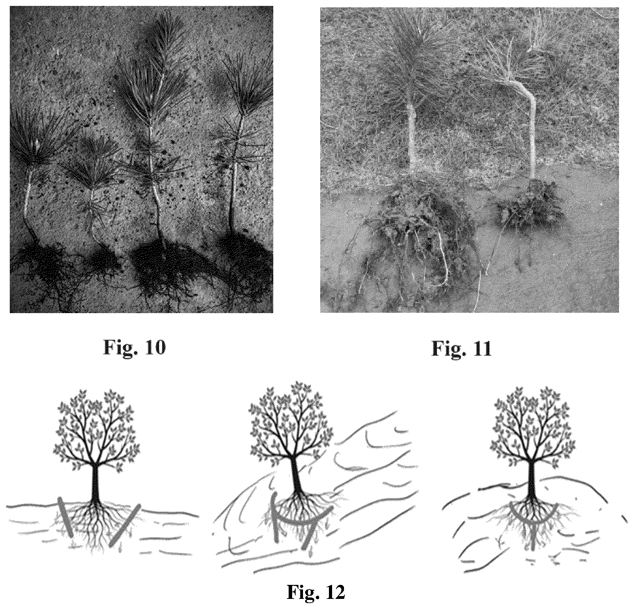

An advantage of the invention is also that it is possible to adapt the form of the composition, its shape and size to the plant environment (ground, vase, pot). The flexibility of the composition, which is provided by the core formed from granular materials, and the possibility of adjusting its form and size, e.g. in the form of a long cylinder with a diameter of several cm and a length of several to several tens of cm, makes it possible to apply the composition to different types and sizes of plants and to apply the composition in the soil at different depths and at different inclination angles. For the prevention of sudden water run-off in uneven terrain, it is possible to arrange two or more compositions as desired, e.g. horizontally and vertically in a T or TT shape or at a different angle (as shown in fig. 12). Depending on the size of the core and the plant and the site on which it is cultivated, one or more compositions can be used.

An important issue and benefit of using the invention is the method of obtaining the components for the cores, which are waste from food production processes (from bones, animal horns), post-mining waste, construction materials waste and mineral waste. According to the 'The balance of mineral resources deposits in Poland', prepared by the Polish Geological Institute and National Research Institute, more than 79 million tonnes of crushed and block stone and 185 million tonnes of natural sand and gravel were extracted in 2021. Attention should also be paid to the extraction of limestone and marl for the cement and lime industry in the amount of 48 million tonnes and moulding, sands, fill sands and for cellular concrete in the amount of 7.4 million tonnes per year [8]. There has been an increase of several per cent in the extraction and production of natural aggregates compared to previous years. There are more than 12 000 developed and undeveloped deposits, which represent a huge potential for the maintenance of infrastructure and development of the construction and road building industry in Poland. A large part of the deposits has associated minerals of good quality, as well as of low economic usefulness, treated as contaminants that must be recovered or removed in the process of mechanical treatment [9,10,11]. The associated minerals and by-products generated in the treatment processes in the production of e.g. aggregates for concrete in municipal and industrial construction, and transport, for road or railway foundation and pavements of concrete and mineral-asphalt mixtures, which are usually weathered (porous) grains with high absorbability, non-normal (grains), and dusts generated during grinding and screening, as well as clays from washing processes, are excellent components for fertilisers and soil fertilization which can be used in the mineral composition promoting plant growth developed by the inventors.

The subject matter of the present invention will be described in detail below with reference to the accompanying figures and embodiments, which are not intended to limit in any way the scope of protection of the invention as defined in the patent claims.

### Brief description of the figures

Fig. 1 shows a schematic diagram of the structure of the mineral composition according to the invention; on the left side - external view, on the right side - cross-section of the composition in the form of a cylinder.
Fig. 2 shows a photograph of the produced mineral composition according to the invention with a shell made of jute (on the left side) and perforated cardboard (on the right side).
Fig. 3 shows a photograph of the outer core formed from flat and porous chalcedonite grains (the mineral skeleton of the composition according to the invention).
Fig. 4 shows a photograph of the structure and components of the fertiliser-mineral mix forming the inner core of the mineral composition according to the invention.
Fig. 5 shows a photograph of the produced mineral granules included in the fertiliser-mineral mix forming the inner core of the mineral composition according to the invention.
Fig. 6 shows the method of producing the mineral composition according to the invention.
Fig. 7 shows a graph of changes in electrolytic conductivity over time presenting differences in the leachability of mineral components between roasted and raw mineral.
Fig. 8 shows a graph of changes in the pH of the solution over time for the tested mineral compositions given in Table 2 (samples 1 to 7).
Fig. 9 shows a graph of changes in the electrolytic conductivity of the solution depending on time and extraction conditions for the tested mineral compositions given in Table 2 (samples 1 to 7).
Fig. 10 shows a photograph of *Pinus thunbergii* saplings after harvesting from a vase cultivation carried out without the mineral composition according to the invention (two saplings on the left side) and with the mineral composition applied (two saplings on the right side).
Fig. 11 shows a photograph of *Pinus uncinata* saplings after one year of pot cultivation with the mineral composition according to the invention (sapling on the left side) and without the mineral composition (sapling on the right side).
Fig. 12 shows schematically a method of applying the mineral compositions according to the invention under plants depending on the slope of the ground.

### Detailed description of the invention

The inventors of the present invention have developed an original innovative mineral composition having a core-shell structure, which consists of a core based on granular materials having a layered structure and a core shell holding the layered structure of the core, wherein the core consists of:
- an outer core formed from at least one type of mineral aggregate with regular or irregular grains, characterised by the cavernosity of at least 40% and a narrow graining range,
- an inner core formed from a fertiliser-mineral mix containing the following components:
   a) at least one granular fertiliser,
   b) mineral granules formed from at least one mineral raw material,
   c) at least one type of mineral aggregate with regular or irregular grains characterised by the cavernosity of at least 40% and a narrow graining range, and
   d) granular bone material,
wherein the outer core surrounds the inner core and the section area of the outer core constitutes from 40 to 60% of the section area of the inner core.

According to the invention, the composition is in the form of a solid having a cross-section in the shape of a circle, ellipse or polygon, the height of which is at least twice the maximum dimension of its cross-section, for example, a long cylinder with a diameter of several cm and a length of several to several tens of cm. Preferably, the composition is in the form of a cylinder with a diameter in the range from 20 to 80 mm, in particular 40 mm, and a height from 100 to 500 mm, in particular 300 mm for plants cultivated in the ground and large containers having a volume of more than 5 1, and in particular 100 mm in height for plants cultivated in small containers, i.e. up to 5 1.

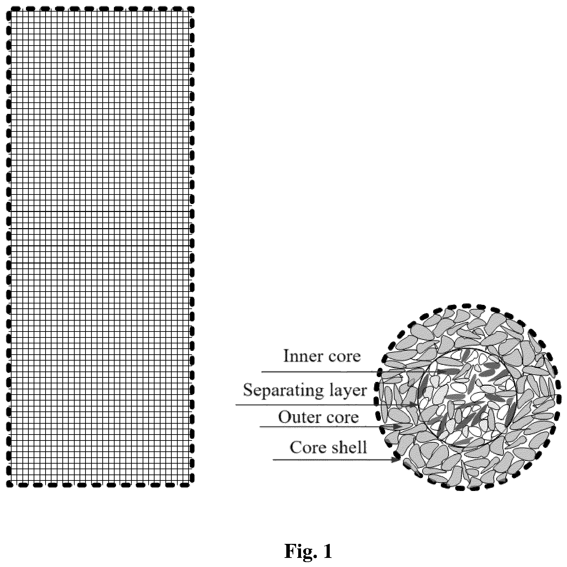

A schematic diagram of the structure of an exemplary mineral composition according to the invention is shown in fig. 1.

### Core shell

According to the invention, the core shell is the outer casing of the mineral composition and holds the entire core and its layered structure until it is placed in the soil and biodegrades. The core shell is made from a biodegradable material that allows the flow of air, water and facilitates the passage of plant roots through the openings into the interior of the core.

In a preferred embodiment, the shell material can be perforated cardboard (cellulose), knitted fabric, e.g. from jute, metallic material, preferably containing elements such as Fe, Mg, Zn, B, Cu, Mo, Mn, e.g. a net of ferrous metal wires or perforated sheet metal, biodegradable plastic or biodegradable polymer material, e.g. a net of biodegradable plastic or polymer.

When the mineral composition according to the invention is used for seasonal plants, such as vegetables, an advantage of using a core shell, e.g. from jute or cardboard, is faster biodegradation of the shell and direct contact of the roots with the core. In contrast, for perennial plants such as trees or shrubs, it is more preferable to use longer biodegradable core shells (net, metal or polymer rolls). Shells made from ferrous metals are preferable due to the enrichment of soil with iron ions during corrosion that occurs in the soil. An important advantage of using compositions with shells from such materials is that, during mechanical agricultural works (ploughing, cultivating), the compositions applied to soil will not have a destructive effect on the working elements of the machine.

In a preferred embodiment of the composition, the core shell may be soaked with a liquid mineral fertiliser, e.g. any commercially available mineral fertiliser in the form of a solution, gel or suspension. The shell material is soaked with such a mineral fertiliser and is dried at a temperature of no more than 30°C. The shell soaked with a mineral fertiliser releases nutrients to the plant roots in an accelerated manner due to its rapid biodegradability.

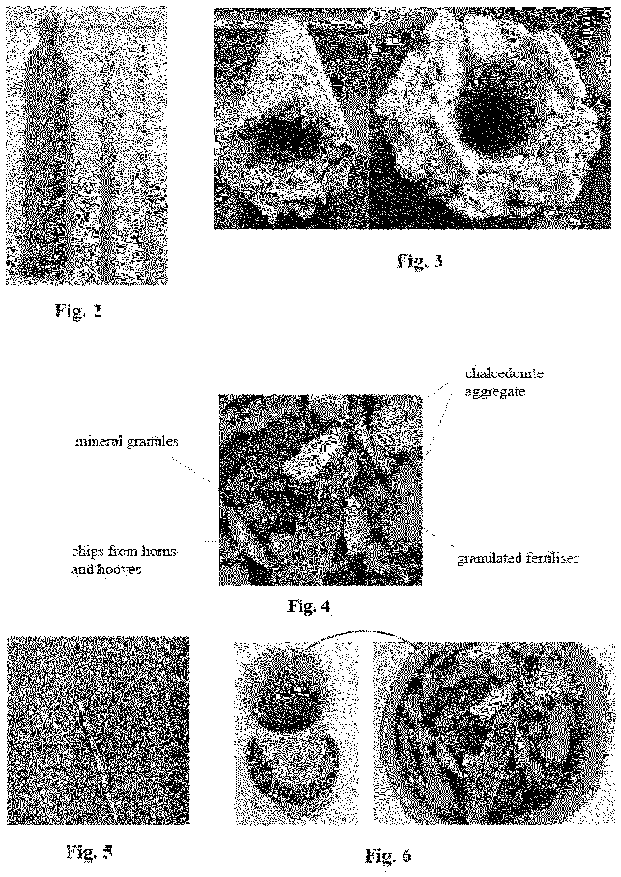

An exemplary form of a mineral composition with a shell formed from perforated cardboard and jute is shown in fig. 2. In a commercial version, the core shell should additionally be wrapped in paper or foil and the packaging should state the name of the product, its constitution and application to the relevant plants, together with indications for application.

### Core

According to the invention, the core has a layered structure and consists of:
- an outer core formed from at least one type of mineral aggregate with regular or irregular grains, characterised by the cavernosity of at least 40% and a narrow graining range,
- an inner core formed from a fertiliser-mineral mix containing the following components:
   a) at least one granular fertiliser,
   b) mineral granules formed from at least one mineral raw material,
   c) at least one type of mineral aggregate with regular or irregular grains, characterised by the cavernosity of at least 40% and a narrow graining range,
   d) granular bone material.

### Outer core

The outer core, which interchangeably may be referred to as the mineral skeleton of the composition (or the ring in the case of a composition produced in the form of a cylinder), is the outer part of the core through which air and water migrate into the ground.

The mineral aggregate used for constructing the outer core should be characterized by a high cavernosity and absorbability, which is advantageous for improving aeration and water retention. It is also important that the aggregate used is a fraction with a narrow graining range, as a wider graining range results in greater packing in space, higher bulk density and a significant reduction in cavernosity. This type of aggregate maintains the outer core in a structure with a high cavernosity enabling air exchange in the soil and easy access of water and roots to the interior of the core, enables easy migration of nutrients into the soil and maintains the moisture and gives water back to the roots.

The cavernous structure of mineral aggregate, which is referred to as cavernosity (%) by the inventors of the present invention in the tests described below, is the proportion of the liquid phase (water) in the intergrain space of a test sample of known volume and mass. The method of testing cavernosity consists in weighing the dry mass of the aggregate (net weight - without a container) contained in a container of known capacity, then pouring distilled water over the aggregate to the level of known capacity (the entire aggregate is covered with water) and weighing the aggregate with water (net weight - without the container). Aggregate cavernosity is the percentage content of intergrain spaces corresponding to the mass of water that occupies the space between the grains, expressed as a percentage.

Graining (granulometric constitution, granulation) refers to the grain size distribution of the crushed material. Graining is determined by examining the percentage content of individual fractions (grain classes) relative to the weight of the entire sample of the tested aggregate.

The narrow graining range of the mineral aggregate in the sense of the present invention means that, in the grain size distribution, the difference between the upper and lower grain size of the grain class is no greater than 2.5 mm. In a preferred embodiment of the invention, a mineral aggregate having a graining range, e.g., from 2 to 4 mm, or from 4 to 6.3 mm, or from 6.3 to 8 mm, or from 8 to 10 mm, or from 10 to 12 mm, is used to form the core.

Tests carried out by the inventors of the present invention have shown that, in the mineral composition according to the invention, it is preferred to use a crushed mineral aggregate with a characteristic cavernous structure, in particular built from porous and flat grains, to form the core. An exemplary outer core formed by flat and porous grains of chalcedonite is shown in fig. 3. Crushed aggregate grains can be replaced with lightweight aggregates with flat grains.

In the aggregate industry, the shape of grains is determined by two standards: using slot sieves (according to PN-EN 933-3:2012 standard. Tests for geometrical properties of aggregates - Part 3: Determination of particle shape by the flakiness index) and using a Schultz caliper (according to PN-EN 933-4:2008 standard. Tests for geometrical properties of aggregates - Part 4: Determination of particle shape - Shape index). Both standards define the percentage proportion of irregular grains in the tested aggregates as the flatness index FI and the shape index SI.

The inventor of the present invention has also developed solutions concerning a system of devices for the production of regular aggregates (patent description PL 233689), a system of devices for the production of irregular aggregates (patent description PL 233690), a multi-deck vibrating screen (patent description PL 231748), for the production of crushed mineral aggregates with regular and irregular grains, applicable in the processing of mineral raw materials in aggregate processing plants. These inventions disclose methods for producing aggregates and the construction of screens operating in a technological system, due to which it is possible to produce mineral aggregates with flat grains applicable for the construction of the mineral composition cores according to the present invention. A preferred solution according to an invention, also developed by the present inventor, entitled: "A system of devices for the production of aggregates and a method for the production of aggregates (patent description PL 233318), is the possibility of obtaining irregular (flat) aggregates with high porosity and absorbability in the process of enriching aggregates in jiggers. By using the above-mentioned four inventions, it is possible to obtain irregular aggregates (flat, elongated) in technological plants on a mass (industrial) scale.

In the preferred embodiment of the mineral composition, the mineral aggregate used to form the outer core may be soaked with a liquid mineral fertiliser, in particular a long-acting mineral fertiliser. In this case, the aggregate is subjected to soaking with the fertiliser for a period of, for example, 24 hours and drying at an ambient temperature (approx. 20°C) of no more than 30°C to a moisture content of less than 1%, e.g. for a period of 7 days. If the aggregate is soaked with mineral fertiliser, it gives up nutrients to the plant roots in an extended manner.

### Inner core

The inner core is the inner part of the core of the composition according to the invention and is formed from a fertiliser-mineral mix, which has its own cavernous structure.

The fertiliser-mineral mix comprises the following components:
(a) at least one granular fertiliser,
(b) mineral granules formed from at least one mineral raw material,
(c) at least one type of mineral aggregate with regular or irregular grains characterised by the cavernosity of at least 40% and a narrow graining range, and
(d) granular bone material.

The structure and components of an exemplary fertiliser-mineral mix forming the inner core are shown in fig. 4.

According to the invention, the granular fertiliser included in the fertiliser-mineral mix forming the inner core of the mineral composition nourishes the plants and maintains the appropriate pH of the soil. Under the influence of soaking and biodegradation, the fertiliser granules spread to provide greater cavernosity of the inner core; that is why the granular fertiliser is only a part of the constitution of the stable inner core structure formed from mineral aggregate grains and granular bone material.

In a preferred embodiment of the mineral composition according to the invention, the granular fertiliser has a graining in the range from 2 to 8 mm, in particular from 3.15 to 6.3 mm, and constitutes a proportion from 5 to 30%, in particular 10% of the fertiliser-mineral mix.

Any known, commercially available, granular fertilizer, preferably long-acting, may be used in the fertilizer-mineral mix. Appropriate fertilizer is selected depending on the type of plants for which the mineral composition according to the invention is intended and the method of their cultivation. If necessary, the fertilizer-mineral mix may comprise more than one fertilizer, e.g. a mixture of different fertilizers.

The mineral granules included in the fertiliser-mineral mix nourish the plants with bioavailable mineral components in the long term and, depending on their constitution, regulate the pH. The mineral granules maintain the moisture and cavernous structure of the inner core in order to oxygenate the root system. In contact with water, the mineral granules swell and soften, then spread thus creating even larger cavities in the earth between the other core components. That is why the mineral granules are only part of the constitution of the stable inner core structure formed from mineral aggregate grains and granular bone material. Mineral granules are obtained by grinding mineral raw materials to a graining of less than 0.2 mm, preferably P90 of less than 0.1 mm (i.e. 90% of the grains are smaller than 0.1 mm). Grinding of mineral raw materials can be carried out dry or wet using standard drum mills, ball mills or other mills, such as rod or planetary mills.

In a preferred form, the mineral granules have a graining in the range from 2 to 10 mm, in particular from 2.0 to 3.15 mm and from 3.15 to 6.3 mm, and constitute a proportion from 30 to 60%, in particular 50%, of the fertiliser-mineral mix.

The mineral granules produced for use in the fertiliser-mineral mix are shown in fig. 5.

Mineral raw materials that can be used to produce mineral granules should contain bioavailable components that are absorbed and utilised by plants. Examples of such raw materials include minerals containing bioavailable components rich in macronutrients (carbon (C), hydrogen (H), oxygen (O), nitrogen (N), sulphur (S) and phosphorus (P)) and micronutrients (iron (Fe), boron (B), copper (Cu), zinc (Zn), manganese (Mn), chlorine (Cl), molybdenum (Mo)), such as biotites, pyroxenes, amphiboles, calcites, dolomites, glauconites, olivines and associated and transformed minerals. Mineral raw materials should also regulate the pH of the soil (e.g. limestone deacidifies the soil, diatomite acidifies). Raw materials used for the production of mineral granules can also include rock raw materials used primarily as by-products (e.g. dusts) from the production process (crushing and screening) of crushed stone aggregates. Examples of rock raw materials include rocks rich in biotites, pyroxenes, amphiboles, calcites, dolomites, glauconites, olivines, such as basalt, glauconitic sandstone and serpentinite.

Mineral granules can be formed from one or more types of minerals raw materials.

In addition, mineral granules may contain standard additives used in granulating, such as wheat flour, humic acid and water.

The mineral aggregate included in the fertiliser-mineral mix forming the inner core of the mineral composition primarily stabilises and maintains the cavernous structure of the inner core in order to oxygenate the root system and to absorb and distribute water during irrigation in the soil structure along the entire length of the core. When the aggregate is soaked with a liquid mineral fertiliser, it returns nutrients to the plant roots in the long term.

The mineral aggregate that is used in the fertiliser-mineral mix forming the inner core of the composition according to the invention should be characterized by the properties discussed above for the mineral aggregate forming the outer core.

In a preferred embodiment of the mineral composition, the mineral aggregate forming the outer core and the mineral aggregate contained in the fertiliser-mineral mix of the inner core are the same or different.

According to the invention, the granular bone material, which in a preferred embodiment of the mineral composition is chips from animal horns and/or hooves, nourishes plants with minerals, especially phosphorus compounds, in the long term and maintains the cavernous structure of the inner core to oxygenate the plant root system. Such bone material significantly increases the soil microflora and microfauna by reforming humus and softening the soil, promoting aeration of the root system. It also has hygroscopic properties which help to retain moisture and release it gradually during drought. In addition, the bone material decomposes in 100%, however slowly (over several years), thus acting in the long term to eliminate the possibility of burning the plant with too much nitrogen. In the constitution of the bone material are valuable amino acids and substances responsible for the proper rooting of plants, organic substances, humic acids, nitrogen, and micronutrients such as boron, iron, manganese, copper, zinc, which advantageously affect plant growth.

In a preferred embodiment of the mineral composition, the bone material has a graining in the range from 2 to 10 mm, in particular from 6.3 to 10 mm, and constitutes a proportion from 5 to 20%, in particular 10% of the fertiliser-mineral mix.

### Examples

The following embodiments illustrate the subject matter of the invention, which is not limited only to the detailed embodiments described here.

### Example 1

### Method of producing the mineral composition

Into the interior of the core shell, which is in the shape of a tube with a bottom, a tube-shaped separating layer having a smaller diameter is inserted and then a flat-grain mineral aggregate soaked with a mineral fertiliser is poured into the space between the core shell and the separating layer. In this way, the outer core is formed. Then the mineral-fertiliser mix is poured into the space on the other side of the separating layer (as shown in fig. 6) to form the inner core, after which the entire structure is vibrated to condense it and the components are poured. Subsequently, the separation layer is removed and the structure is vibrated again, the aggregate is poured and the core shell is closed.

The separation layer can also be left inside the core to temporarily (until it biodegrades) separate the outer core from the inner core.

The method presented above produces a mineral composition in the form of a cylinder, the cross-section and external view of which is schematically shown in fig. 1.

### Example 2

### Method of producing mineral granules

The following mineral raw materials and additives were used to produce the mineral granules:

| Components | Weight (g) | Proportion (%) |
|---|---|---|
| basalt | 1000 | 29.6 |
| glauconite | 1000 | 29.6 |
| serpentinite | 1000 | 29.6 |
| wheat flour | 40 | 1.2 |
| humic acid (KH) | 214 | 6.3 |
| water | 120 | 3.6 |

The mineral raw materials listed above were dry-milled in a ball mill to a graining of less than 0.1 mm. Then, all components were granulated by a standard method in a mixer granulator. Mineral granules were produced in the graining range from 3.15 to 6.3 mm and from 2.0 to 3.15 mm. The granules obtained were dried at the temperature of 30°C to a moisture content of less than 1% and, after drying, their strength was tested, which was assessed as excellent (granules difficult to crush in the fingers).

The structure of the mineral granules produced is shown in fig. 5.

### Example 3

### Activation of minerals comprising bioavailable components by a thermal method

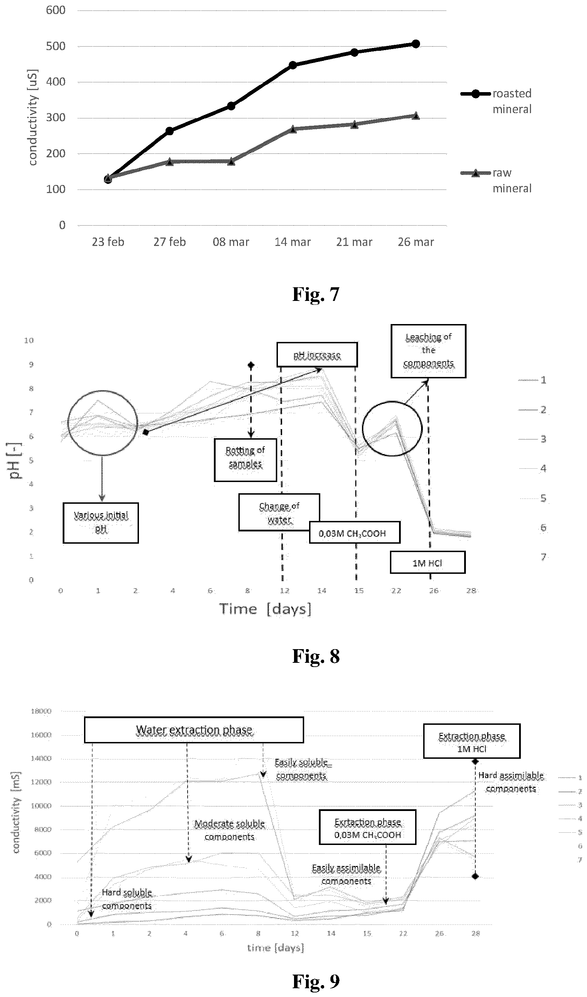

The release of bioavailable components was tested using paramagnetic minerals (biotite, pyroxene, amphiboles), containing mainly biotite, as an example. Biotites and minerals from the group of pyroxenes and amphiboles are the most valuable and richest in bioavailable components minerals. For example, biotite, K(Mg,Fe)₃AlSi₃O₁₀(OH)₂, is a potential mineral raw material of magnesium and potassium. However, in its natural form, the release of these components is very slow. In order to activate and transform this mineral, it was subjected to a roasting process at the temperature of 1000°C and then differences in leaching of the components between the roasted and raw mineral were studied. The experiment was conducted for 5 weeks. The results are presented in the graph (fig. 7), which shows changes in the electrolytic conductivity of the filtrate in the two samples (roasted and raw biotite).

As a result of the conducted experiment, almost twofold higher leachability of the mineral components was found in the case of the roasted mineral, as indicated by an increase in electrolytic conductivity.

### Example 4

### Production of mineral compositions, tests of properties of selected mineral aggregates and analysis of results

Tests were carried out on various waste aggregates, i.e. aggregates unsuitable for the manufacture of concrete and mineral asphalt mixes. Different narrow fractions of different shapes (ZN - irregular grains, ZF - regular near polyhedral, round grains) were produced and separated in order to assess their properties. The type of aggregate used in the tests (gravel, chalcedonite, clay slate, fired or roasted clay after shaping, Japanese akadama and Japanese kiryu), its graining and grain shape, and the properties assessed (bulk density, cavernosity and absorbability) are given in Table 1.

On the basis of performed analyses of aggregate properties, it was concluded that aggregates with flat grains are most advantageous for the production of compositions according to the invention, due to their higher cavernosity and absorbability, even by several per cent compared to regular (round) grains. High cavernosity improves aeration, while absorbability affects water retention. It is also important that the mineral aggregates used for constructing the core have a narrow graining range, as a wider graining range results in greater packing in space, higher bulk density and a significant reduction in cavernosity.

**Table 1. Properties of tested mineral aggregates**

| Graining (mm) and type of aggregate | Grain shape | Bulk density, g/cm³ | Cavernosity, % | Absorbability after 24 h, % | Remarks |
|---|---|---|---|---|---|
| from 8 to 10 ZN chalcedonite | flat | 1.00 | 54.9 | 10.3 | waste management |
| from 8 to 10 ZF chalcedonite | regular | 1.12 | 47.9 | 8.5 | waste management |
| from 6.3 to 8 ZN chalcedonite | flat | 0.94 | 55.8 | 12.2 | waste management |
| from 6.3 to 8 ZF chalcedonite | regular | 1.03 | 51.3 | 11.4 | waste management |
| from 4 to 6.3 ZN chalcedonite | flat | 1.00 | 55.0 | 13.8 | waste management |
| from 4 to 6.3 ZF chalcedonite | regular | 1.10 | 48.4 | 11.2 | waste management |
| from 2 to 4 ZN chalcedonite | flat | 1.03 | 53.6 | 13.9 | waste management |
| from 2 to 4 ZF chalcedonite | regular | 1.07 | 51.7 | 11.1 | waste management |
| from 4 to 6.3 ZN gravel | flat | 1.16 | 53.3 | 7.4 | waste management |
| from 6.3 to 8 ZN gravel | flat | 1.17 | 52.9 | 6.7 | waste management |
| from 3.15 to 5 ZN fired clay 1000°C | flat | 0.79 | 66.7 | 42.2 | high price due to firing, waste management |
| from 3.15 to 5 ZN roasted clay 600°C | flat | 0.87 | 61.2 | 45.2 | high price due to firing, waste management |
| from 3.15 to 5 ZF fired clay 1050°C | regular (round) | 1.14 | 54.6 | 15 | high price due to firing, waste management, glazed surface |
| from 3.15 to 5 ZN clay slate | flat | 0.79 | 60.3 | 21.4 | waste management |
| from 3.15 to 5 ZF Japanese akadama | regular (round) | 0.8 | 55.8 | 30.6 | very high price, durability of the structure up to 3-4 years |
| from 3.15 to 5 ZF Japanese kiryu | regular (round) | 0.82 | 50 | 30.1 | very high price, durability of the structure up to 3-4 years |

To form the outer cores of the mineral compositions produced, a chalcedonite aggregate with a graining from 6.3 to 8 mm with flat grains was selected, due to the durability of the aggregate, its high cavernosity of up to 56% and absorbability after 24 h of almost 12%. Chalcedonite aggregate with a graining from 6.3 to 8 mm with flat grains was also used as a component of the fertiliser-mineral mix forming the inner core. In the defined properties of the aggregates, the flat grains referred to and used for the exemplary experiments are grains constituting a proportion of 100% as measured by the flakiness index FI or the shape index SI according to PN-EN 933-3:2012 and PN-EN 933-4:2008 standards.

Table 2 summarises the constitution and proportion of the components of the produced mineral compositions, which were used for the studies and tests.

The mineral granules used to form the inner cores had the mineral raw materials (crushed and granulated) constitution given in Example 2.

The following commercially available fertilisers were used as fertilisers: a long-acting granular fertiliser with a graining size from 3.15 to 6.3 mm (long-acting fertiliser for conifers, Substral by Evergreen) as a component of the fertiliser-mineral mix, and a fertiliser in the form of a gel (fertiliser for conifers and thuja and ornamental trees and shrubs, Agrecol by Agrecol sp. z o.o.) for the soaking of aggregates and core shells.

The bone material that was used as a component of the fertiliser-mineral mix had a graining size from 6.3 to 10 mm.

For the laboratory tests, the core shells were made from perforated cardboard in the shape of a cylinder with a diameter of 4 cm and a height of 11 cm.

**Table 2. Constitution of mineral compositions**

| Test no. and sample no. | | Components | Proportion % |
|---|---|---|---|
| 1 | inner core | mineral granules | 50 |
| | | chips from horns and hooves | 10 |
| | | chalcedonite aggregate | 40 |
| | outer core | chalcedonite aggregate | 100 |
| | core shell | perforated cardboard roll or jute | |
| | | | |
| 2 | inner core | mineral granules | 50 |
| | | chips from horns and hooves | 10 |
| | | chalcedonite aggregate | 40 |
| | outer core | chalcedonite aggregate | 100 |
| | core shell | perforated cardboard roll soaked with agrecol or jute | |
| | | | |
| 3 | inner core | mineral granules | 50 |
| | | chips from horns and hooves | 10 |
| | | chalcedonite aggregate soaked with agrecol | 40 |
| | outer core | chalcedonite aggregate | 100 |
| | core shell | perforated cardboard roll soaked with agrecol or jute | |
| | | | |
| 4 | inner core | mineral granules | 50 |
| | | chips from horns and hooves | 10 |
| | | chalcedonite aggregate soaked with agrecol | 40 |
| | outer core | chalcedonite aggregate soaked with agrecol | 100 |
| | core shell | perforated cardboard roll soaked with agrecol or jute | |
| | | | |
| 5 | inner core | mineral granules | 50 |
| | | chips from horns and hooves | 10 |
| | | chalcedonite aggregate | 30 |
| | | long-acting granular fertilizer substral | 10 |
| | outer core | chalcedonite aggregate | 100 |
| | core shell | perforated cardboard roll or jute | |
| | | | |
| 6 | inner core | mineral granules | 50 |
| | | chips from horns and hooves | 10 |
| | | chalcedonite aggregate soaked with agrecol | 30 |
| | | long-acting granular fertilizer substral | 10 |
| | outer core | chalcedonite aggregate | 100 |
| | core shell | perforated cardboard roll soaked with agrecol or jute | |
| | | | |
| 7 | inner core | mineral granules | 50 |
| | | chips from horns and hooves | 10 |
| | | chalcedonite aggregate soaked with agrecol | 30 |
| | | long-acting granular fertilizer substral | 10 |
| | outer core | chalcedonite aggregate soaked with agrecol | 100 |
| | core shell | perforated cardboard roll or jute | |

A four-week experiment was conducted, monitoring changes in the pH and electrolytic conductivity of the solutions in which the produced mineral compositions were immersed. Electrolytic conductivity is a good measure for the determination of components dissolved in water. The pH of water used in the experiment was 6.26.

Fig. 8 shows a visualisation of the experiment by means of a graph depicting the course of changes in the solution's pH over time for the tested mineral compositions given in Table 2 (samples no. 1, 2, 3, 4, 5, 6 and 7). It can be seen from the analysis of the results that the initial pH was different depending on the composition used. The pH values on the first days of the experiment were from about 5.8 to 7.5. After two days of the experiment, the pH stabilised at a neutral level of about 6.5. after which it started to increase.

Generally, the pH of a solution does not depend on the total concentration of the dissolved components but on the concentration of H⁺ ions. Some fertiliser salts, as a result of hydrolysis reactions, will change pH depending on the components they are made of (weak and strong electrolytes), and thus their solubility can be inferred indirectly from changes in pH. The increase in the pH in the experiment was therefore the result of two processes. Firstly, it is the result of the hydrolytic reaction of fertiliser salts derived from strong bases and weak acids. These are typical deacidifying mineral fertilisers of the lime or dolomite type:

Ca²⁺ + CO₃²⁻ + 2H₂O → H₂CO₃ + Ca²⁺ + 2OH⁻

The second reason is putrefaction processes with the release of ammonia:

NH₃ - H₂ O → NH₄⁺ + OH⁻

Then, after 12 days the experimental water was changed and the compositions were poured with acetic acid. According to a method known in the field, the extraction of the easily assimilable forms of the components (N, P, K, Mn and Ca) was carried out with 0.03 M acetic acid with a pH of 3.2. A significant reduction in the pH was observed in all samples, with the release of easily accessible elements on the following day (fig. 8).

The assimilability of metals such as Cu, Zn, Fe or Mn, which act as micronutrients essential for plants (as well as soil microflora and fauna), depends not so much on the total metal content in the soil, but on the forms in which they occur. It is assumed that the pool of metals assimilable to plants is their amount soluble in an extraction solution. Such a solution is 1 M HCl. Extraction in hydrochloric acid provides information on the content of heavy metal forms potentially assimilable to plants. In the last phase of the experiment, the cores were poured with 1 M hydrochloric acid solution.

Fig. 9 illustrates the course of the experiment based on the recorded electrolytic conductivity, i.e. the sum of the dissolved components. The base value of the distilled water used in the tests was 22.3 µS, which can be ignored in the interpretation of the results. The conductivity of a weak electrolyte such as acetic acid was at 505 mS and this value was subtracted from the measurement result. The same was done in conditions with hydrochloric acid. Hydrochloric acid as a strong and fully dissociated electrolyte had a reference conductivity of 11400 mS. To determine the actual amount of hard assimilable components (and residual Ca and Mg), the base value was subtracted. A correlation can be seen that the more compounds were released during the aqueous extraction, the less in the hydrochloric acid extraction phase. Compositions that release hard assimilable compounds can be defined as compositions with prolonged action.

The results obtained in the tests carried out on selected mineral compositions show that, in principle, each type of composition shows its own advantages adequate to the needs of plant crops. One example is provided by mineral compositions 1, 2 and 3 (Table 2), which will be most preferred for a very slow release of components for fertile soils but requiring retention. They will be applicable where plants do not need immediate nutrition but there are problems with hydration and water retention (e.g. urban greenery). On the other hand, where there are nutrient-depleted conditions and the soil is of low retention, compositions with cores with very rapid release of easily assimilable components and prolonged action along with retention are preferred (compositions 4, 6, 7 from Table 2).

On the basis of laboratory experiments conducted with monitoring the pH changes and electrolytic conductivity of the solutions, cores were selected in terms of advantageous constitution and action for coniferous saplings. i.e. composition no. 6 (Table 2), because it has a lot of easily soluble compounds - which means that it nourishes the plants immediately, it also has easily assimilable compounds and it also releases compounds that are difficult to dissolve, which are potentially nutritious.

More than 100 mineral compositions consisting of cores in jute- and cardboard-shells in the shape of a cylinder with a diameter of 4.5 cm and a height of 26 cm were produced and used for the studies of plant growth in field conditions (studies were conducted for the species *Pinus banksiana* and *Pinus tabulaeformis*), in pots (studies were conducted for the species *Pinus uncinata* and *Pinus tabulaeformis*) and in vases (studies were conducted for the species *Pinus thunbergii).*

Figures 10 and 11 show exemplary results of the cultivation of saplings in vase and pot conditions with and without using the mineral compositions according to the invention. All plants in vases and pots (with and without applied mineral compositions) were nursed in the same way (watered and supplied twice with a granular fertiliser in April and May, 4 g under each plant (19N, 5P, 13K, 2Mg).

The greatest effects of green and root mass growth were observed in the vase cultivation exposed on a strongly sunny site sheltered from the wind. One-year shoots of saplings with compositions applied in the growth period from March to August reached a maximum of 20 cm and were even twice as big as the saplings without applied compositions (fig. 10). The root mass of the plants cultivated with the applied compositions was also twice as large.

Smaller effects of green mass growth were observed in the potted cultivation of plants exposed in a moderately sunny position, partially shaded also sheltered from the wind. The shoot growth of saplings with the applied compositions reached a maximum of 17 cm and were 20 to 70% greater than the saplings cultivated without the use of the composition according to the invention. After a growth period from March to April of the following year (13 months), a significant increase in root mass was observed. i.e. over twofold (fig. 11).

The substrate constitution for the plants in vases and pots was 50% clayey-silty soil and 50% deacidified peat substrate (deacidified peat pH from 5.5 to 6.5, from Hartmann).

The least effects of green mass growth were observed in the field conditions on a sunny site exposed to winds in a clayey-silty soil with a tendency to dry out slightly on hot days. Saplings with applied compositions achieved higher shoot growth from 10 to 40% compared to saplings cultivated without compositions depending on the type of pine. Saplings in field conditions with applied compositions were not additionally fed with fertilisers, while saplings cultivated without compositions were fertilised in a similar way as plants in vases and pots.

As a result of the studies carried out, it can be concluded that the mineral compositions according to the invention applied to plants cultivated in the ground, pots and vases cause an increase in green mass in the form of one-year shoots from 20 to 100% and the development of root mass over twofold.

### List of literature references:

1. Lewak S., Kopcewicz J., Jaworski K.: Fizjologia rośfin. Wprowadzenie. PWN Warszawa 2021.
2. https://www.globstal.pl/blog/jak-uzyznic-glebe-gliniasta-3-sposoby.
3. https://agrecol.pl/dra problem/fvtoftoroza-iglakow/.
4. Z. Sierota, A. Szczepkowski, Rozpoznawanie chorób infekcyjnych drzew leśnych, CILP, Warszawa, 2014.
5. https ://www.farmer,pl/produkcja-roslinna/napowietrzanie-wody-sposobem-na-zwiekszenie-efektywnosci-irygacji,121900.html.
6. Nauka. To lubi 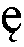 . Ocieplenie a zjawisko pogodowe, odcinek 4. Pogoda jest jak pies na smyczy. https://www.youtube.com/watch?v=ZX YiMmSSRs.
7. Nauka. To lubi 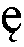 . Co ma klimat do suszy, odcinek 5. Gleba jak beton. Jak szybko wysycha nam Polska? https://www.voutube.com/watch?v=Gib WgCAbko.
8. Szuflicki M. Malon A., Tymiński M.: Bilans zasobów z 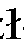 óż kopalin w Polsce wg stanu na 31 XII 2021 r. Państwowy Instytut Geologiczny, Państwowy Instytut Badawczy, Warszawa 2022.
9. Naziemiec Z., Gawenda T. 2007: Plukanie kruszyw. Surowce i Maszyny Budowlane, nr 5, s. 30-34.
10. Naziemiec Z.: *Przeróbka i badania kruszyw mineralnych.* Rozprawy Monografie nr 356. Wyd. AGH, Kraków 2019. Gawenda T.: *Zasady doboru kruszarek oraz uk* 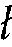 *adów technologicznych w produkcji kruszyw lamanych.* Rozprawy Monografie nr 304, Wyd. AGH 2015

## Claims

1. A mineral composition promoting plant growth having a core-shell structure, **characterised in that** it consists of a core based on granular materials which has a layered structure and a core shell holding the layered structure of the core, wherein the core consists of:
- an outer core formed from at least one type of mineral aggregate with regular or irregular grains **characterised by** the cavernosity of at least 40% and a narrow graining range,
- an inner core formed from a fertiliser-mineral mix comprising the following components:
a) at least one granular fertiliser,
b) mineral granules formed from at least one mineral raw material,
c) at least one type of mineral aggregate with regular or irregular grains **characterised by** the cavernosity of at least 40% and a narrow graining range,
d) granular bone material,
wherein the outer core surrounds the inner core and the section area of the outer core constitutes from 40 to 60% of the section area of the inner core.

2. The composition according to claim 1, **characterised in that** the section area of the outer core constitutes 50% of the section area of the inner core.

3. The composition according to claim 1 or 2, **characterised in that** the mineral aggregate forming the outer core and/or the mineral aggregate contained in the fertiliser-mineral mix of the inner core is a crushed mineral aggregate, or a mineral aggregate having flat grains, wherein preferably the aggregate is a mineral aggregate with a grain size distribution in which the difference between the upper and lower grain size of the grain class is no greater than 2.5 mm, in particular the aggregate is **characterised by** the cavernosity of more than 55% and/or an absorbability after 24 h of at least 10% and/or a bulk density of not more than 1.2 g/cm³, and wherein the mineral aggregate forming the outer core and the mineral aggregate contained in the fertiliser-mineral mix of the inner core are the same or different.

4. The composition according to any of the claims 1 to 3, **characterised in that** the mineral aggregate forming the outer core is selected from the group comprising chalcedonite, gravel, fired or roasted clay and clay slate, and the mineral aggregate contained in the fertiliser-mineral mix of the inner core is selected from the group comprising chalcedonite, gravel, fired or roasted clay, clay slate, Japanese akadama and Japanese kiryu, wherein in particular the mineral aggregate forming the outer core and/or the mineral aggregate contained in the fertiliser-mineral mix of the inner core is a chalcedonite aggregate, preferably having a graining from 6.3 to 8 mm.

5. The composition according to any of claims 1 to 4, **characterised in that** the fertiliser-mineral mix comprises a granular fertiliser, preferably long-acting, more preferably having a graining from 2 to 8 mm, in particular from 3.15 to 6.3 mm.

6. The composition according to any of the claims 1 to 5, **characterised in that** the mineral granules are formed from a mineral raw material or mineral raw materials grinded to a graining of less than 0.2 mm, preferably P90 of less than 0.1 mm, or mineral dusts after processing of mineral raw materials being by-products from the production process, crushing and screening of crushed aggregates, wherein preferably the mineral raw material or mineral raw materials are selected from the group comprising:
- minerals containing bioavailable components such as biotites, pyroxenes, amphiboles, calcites, dolomites, glauconites, olivines and related and transformed minerals,
- rocks rich in biotites, pyroxenes, amphiboles, calcites, dolomites, glauconites, olivines, such as basalt, glauconitic sandstone and serpentinite, and
- soil pH-regulating raw materials such as limestone, dolomite and diatomite,
wherein optionally the mineral granules further contain standard additives used in granulation, in particular selected from the group comprising wheat flour, humic acid and water, and preferably, in the mineral granule constitution, the percentage proportion of basalt is from 20 to 40%, in particular 30%, of glauconite from 20 to 40%, in particular 30%, of serpentinite from 20 to 40%, in particular 30%, of wheat flour from 0.5 to 2%, in particular 1%, of humic acid from 4 to 10%, in particular 6%, and of water from 2 to 8%, in particular 3%.

7. The composition according to any of the claims 1 to 6, **characterised in that** the mineral granules are formed from a mineral raw material or mineral raw materials activated by a thermal method, in particular by roasting at the temperature of 1000°C or the mineral granules are activated with agents influencing favourable plant development selected from the group comprising bioactive agents and microorganisms.

8. The composition according to any of the claims 1 to 7 **characterised in that** the mineral granules have a graining in the range from 2 to 10 mm, preferably from 2.0 to 3.15 mm and from 3.15 to 6.3 mm.

9. The composition according to any of the claims 1 to 8, **characterised in that** the bone material is chips from animal horns and/or hooves, preferably having a graining from 2 to 10 mm, in particular from 6.3 to 10 mm.

10. The composition according to any of the claims 1 to 9, **characterised in that**, in the constitution of the fertilizer-mineral mix, the percentage proportion of granular fertilizer is from 5 to 30%, in particular 10%, of mineral granules from 30 to 60%, in particular 50%, of the mineral aggregate from 20 to 40%, in particular 30% and of bone material from 5 to 20%, in particular 10%.

11. The composition according to any of the claims 1 to 10, **characterised in that** the core shell is a biodegradable material selected from a metallic material, preferably containing elements such as Fe, Mg, Zn, B, Cu, Mo, Mn, a cellulosic material, a fabric, a plastic or a polymeric material, in particular a net of ferrous metal wires or perforated sheet, a net of plastic or polymer, perforated cardboard or jute.

12. The composition according to any of the claims 1 to 11, **characterised in that** the mineral aggregate forming the outer core and/or the mineral aggregate contained in the fertiliser-mineral mix of the inner core and/or the shell material is soaked with mineral fertiliser.

13. The composition according to any of the claims 1 to 12, **characterised in that**, between the outer core and the inner core, a layer separating these cores is placed, preferably from a biodegradable material.

14. The composition according to any of the claims 1 to 13, **characterised in that** the core is in the shape of a cylinder with a diameter in the range from 20 to 80 mm, preferably 40 mm and a height from 100 to 500 mm, preferably 300 mm for plants cultivated in the ground and large containers and preferably 100 mm for plants cultivated in small containers.

15. The composition according to any of the claims 1 to 14, **characterised in that** the composition is in the form of a solid having a cross-section in the shape of a circle, ellipse or polygon, wherein the height of the solid is at least twice the maximum dimension of its cross-section.
